# EUROPEAN PATENT APPLICATION

(11) **EP 2 050 678 A1**
(43) Date of publication of application: **22.04.2009**
(21) Application number: 08002310.4
(22) Date of filing: 24.08.2007
(51) Int. Cl.: B65D 1/34, B27D 1/08, B27G 1/00, B30B 15/02

(54) **Process and apparatus for manufacturing a wooden container**

(62) Divisional of application: 07016667.3
(71) Applicant: Kabushiki Kaisha Shinrin-Shigen-Riyo-Sokushin-Kenkyusho, Osaka-shi Osaka (JP)
(72) Inventor: Kitajima, Shigeto, Hitoyoshi-shi Kumamoto-ken (JP)
(74) Representative: Hering, Hartmut

(57) **Abstract**

A process and an apparatus for manufacturing a wooden container of which whole part is made by a sheet of wood are provided. The process comprises a first forming step of producing an intermediate product (1a) of the container by carrying out heating pressurization to a sheet (6) on its center region (6c) except its peripheral region (6p) between male and female dies (14, 15), thereby the intermediate product (1a) formed with a bottom wall (2a) and a peripheral wall (3a) having an edge portion (4a) extending upwardly therefrom is produced, and a second forming step of forming a finished product (1) of the container by carrying out further heating pressurization to the intermediate product (1a) by clamping entire part thereof between the male and female dies (14, 15), whereby the edge portion (4a) is formed into the surrounding edge (4), thereby the finished product (1) formed with the bottom wall (2), the peripheral wall (3) and the surrounding edge (4) is produced.

## Description

### [Field of the Invention]

The present invention relates to a process and an apparatus for manufacturing a wooden container.

### [Background of the Invention]

It is known that a tray-like container for packing and selling food, fresh food such as fishes or vegetables for example, is formed and shaped by a foamed plastic sheet generally. The container is usually in white color, a film printed with a wood-grain pattern may be laminated on the plastic sheet in order to create a high grade appearance.

Since the plastic container has a problem of waste treatment, it is desirable to spread wooden containers widely as possible which can be incinerated. In addition, wooden containers are excellent in hygroscopicity etc., they fit packing wet food. For this reason, a wooden container formed by a wooden thin plate is already proposed in prior art.

A wooden container in prior art is formed by a wooden plate which is heated and pressed by up-and-down dies to provide a bottom wall and a peripheral wall of the container. The wooden plates for manufacturing such containers are obtained by slicing wood pieces.

A container for packing fresh food is provided not only with a bottom wall and a peripheral wall but also with a surrounding edge extending downward as circular in cross section along an upper edge of the peripheral wall. Because the surrounding edge makes the wrapping operation easy when a container packing food is wrapped by a film.
When a container packing food is wrapped by a film, the surrounding edge makes the wrapping operation easy. There are strong needs by users to use containers with such surrounding edge.

However, it is considered that, in case that a wooden container is manufactured by carrying out heating pressurization to a sheet of wood between male and female dies, the sheet is formed at the same time with a bottom wall, a peripheral wall and a surrounding edge. In this case, the sheet is pressed in such a direction as forming the bottom and peripheral walls while a peripheral edge of the peripheral wall being pulled in the same direction, and the peripheral edge is pressed at the same time in the opposite direction to form the surrounding edge. The probability of generating cracks at the peripheral edge becomes high.

There would be such further problem that the container may include distortion of a twist and the like in the bottom wall or the peripheral wall when it is manufactured by carrying out heating pressurization to the sheet between male and female dies.

### [Summery of the Invention]

For the purposes of solving the problems mentioned above, the present invention provides a process and an apparatus for manufacturing a wooden container such as tray-like configuration, of which whole part is made by a sheet of wood, having a bottom wall, a peripheral wall and a surrounding edge extending downward as circular in cross section along an upper edge of the peripheral wall by carrying out heating pressurization to said sheet.

The present invention provides a process for manufacturing a wooden container, of which whole part is made by a sheet of wood, having a bottom wall (2), a peripheral wall (3) and a surrounding edge (4) extending downward as circular in cross section along an upper edge of said peripheral wall (3) by carrying out heating pressurization to said sheet (6) between male and female dies (14, 15) of a press apparatus (13) comprising: a first forming step of producing an intermediate product (1a) of the container by carrying out heating pressurization to said sheet (6) on its center region (6c) except its peripheral region (6p) between said male and female dies (14, 15), thereby the intermediate product (1a) formed with a bottom wall (2a) and a peripheral wall (3a) having an edge portion (4a) extending upwardly therefrom is produced; and a second forming step of forming a finished product (1) of the container by carrying out further heating pressurization to said intermediate product (1a) by clamping entire part thereof between said male and female dies (14, 15), whereby said bottom and peripheral walls (2a, 3a) are firmly pressed, and said edge portion (4a) is formed into said surrounding edge (4), thereby the finished product (1) formed with said bottom wall (2), said peripheral wall (3) and said surrounding edge (4) is produced.

The bottom and peripheral walls (2a, 3a) of the intermediate product (1a) are firmly clamped in the second forming step so that any distortions of said walls (2a, 3a) may be corrected.

Also the present invention provides a process for manufacturing a wooden container, of which whole part is made by a sheet of wood, having a bottom wall (2), a peripheral wall (3) and a surrounding edge (4) extending downward as circular in cross section along an upper edge of said peripheral wall (3) by carrying out heating pressurization to said sheet (6) between male and female dies (14, 15) of a press apparatus (13) comprising: a first forming step of producing an intermediate product (1a) of the container by closing said press apparatus (13) so that said male and female dies (14, 15) are closed so as not to be brought in a complete clamp state, and carrying out heating pressurization to said sheet (6) on its center region (6c) except its peripheral region (6p) between a convex (20) of said male die (14) and a concave (16) of said female die (15), thereby the intermediate product (1a) formed with a bottom wall (2a) and a peripheral wall (3a) having an edge portion (4a) extending upwardly therefrom is produced; and a second forming step of forming a finished product (1) of the container by further closing said press apparatus (13) until said male and female dies (14, 15) are brought in a complete clamp state, and carrying out further heating pressurization to said intermediate product (1a) by clamping entire part thereof, whereby said bottom and peripheral walls (2a, 3a) are firmly pressed between said convex (20) and said concave (16) of the dies (14, 15), and said edge portion (4a) is formed into said surrounding edge (4) between an annular groove (23) and an annular projection (17) of said closed male and female dies (14, 15), thereby the finished product (1) formed with said bottom wall (2), said peripheral wall (3) and said surrounding edge (4) is produced.

Further the present invention provides an apparatus for manufacturing a wooden container, of which whole part is made by a sheet of wood, having a bottom wall (2), a peripheral wall (3) and a surrounding edge (4) extending downward as circular in cross section along an upper edge of said peripheral wall (3) by carrying out heating pressurization to said sheet (6) comprising: a male die (14), a female die (15) and a driving source to open and close said male and female dies (14, 15) wherein: said female die (15) includes a concave (16) and an annular projection (17), said concave (16) being shaped corresponding to outer surfaces of said bottom and peripheral walls (2, 3) of the container (1), and said annular projection (17) being shaped corresponding to a lower surface of said surrounding edge (4) and extending outwardly in an arch-shape in cross section from an opening edge of said concave (16); and said male die (14) includes a main die (18) and a moving die (19) which is movable in forward and backward directions from said main die (18) toward said female die (15), said moving die (19) being pushed by pushing means (22) to project from said main die (18) and provided with a convex (20) in a shape corresponding to inner surfaces of said bottom and peripheral walls (2, 3), and said main die (18) being provided with an annular groove (23) in a shape corresponding to an upper surface of said surrounding edge (4) so that said annular groove (23) fits its surface in a smooth manner to a peripheral edge of said convex (20) when the moving die (19) is moved fully backward; whereby a first forming step is performed by closing said male and female dies (14, 15) and carrying out heating pressurization to said sheet (6) on its center region (6c) except its peripheral region (6p) between said concave (16) and said convex (20) by moving said moving die (19) backward against said pushing means (22) under the state that said annular groove (23) and said annular projection (17) are apart mutually, thereby an intermediate product (1a) formed with a bottom wall (2a) and a peripheral wall (3a) having an edge portion (4a) extending upwardly therefrom is produced; and subsequently a second forming step is performed by further closing said male and female dies (14, 15) until said male and female dies (14, 15) are brought in a complete clamp state and carrying out further heating pressurization to said intermediate product (1a) by clamping entire part thereof, whereby said bottom and peripheral walls (2a, 3a) are firmly pressed between said convex (20) and said concave (16) of the dies (14, 15), and said edge portion (4a) is clamped between said annular groove (23) and said annular projection (17) by moving said moving die (19) fully backward so that said edge portion (4a) is formed into said surrounding edge (4), thereby the finished product (1) formed with said bottom wall (2), said peripheral wall (3) and said surrounding edge (4) is produced.

The female die (15) is provided with support means (24) which is movable in forward and backward directions toward said concave (16) and projects by a spring (24b) so that an end of said support means (24) comes at a position in said concave (16) substantially same level of the height of said annular projection (17), whereby said sheet (6) is supported at its undersurface of the center region (6c) by said support means (24) when said sheet (6) is put on said annular projection (17), and said sheet (6) is pushed by said convex (20) into said concave (16) while the undersurface of said sheet (6) is supported by said support means (24) which retreats from said concave (16) against said spring (24b).

According to the present invention, a process for manufacturing a wooden container is offered wherein the peripheral wall is provided with a surrounding edge extending along an upper edge thereof in a shape of circular extending downward in cross section.
When a container packing food is wrapped by a film, the surrounding edge makes the wrapping operation easy. There are strong needs by users to use containers with such surrounding edge.
In case that, however, a wooden container is manufactured by carrying out heating pressurization to a sheet of wood between male and female dies so that the sheet is formed at the same time with a bottom wall, a peripheral wall and a surrounding edge, a potential problem may be found such that the sheet is pressed in such a direction as forming the bottom and peripheral walls by pulling the peripheral wall toward the bottom wall, but the peripheral edge is pressed at the same time in the opposite direction to form the surrounding edge. The probability of generating cracks at the peripheral edge becomes high.

To solve the problem of causing cracks, the present invention carries out two steps of forming, i.e., a first forming step and a second forming step.
The first forming step produces an intermediate product by carrying out heating pressurization to the sheet within the press apparatus. The intermediate product is formed with a bottom wall and a peripheral wall having an edge portion extending upwardly therefrom. This means that the edge portion is not pressed.
The second forming step is subsequently carried out to produce a finished product by applying further heating pressurization to the intermediate product within the same press apparatus. The edge portion of the intermediate product is now pressed to be bent in circular extending downward. The finished product container having the surrounding edge is obtained and taken out the press apparatus.

Therefore, the probability of generating cracks at the peripheral edge becomes very low, and wooden containers having the surrounding edge are manufactured under good yields conditions.

In addition, the second forming step not only forms the surrounding edge, but clamps again the bottom and peripheral walls of the intermediate product. The bottom and peripheral walls are strongly clamped so that the wood is stiffened firmly and improves intensity. In addition, even in case that the intermediate product formed by the first forming step includes distortion of a twist and the like in the bottom wall or the peripheral wall, such distortion is corrected by the second forming step.

### [Brief Description of the Drawings]

Fig. 1 (A) to Fig. 1 (C) show an embodiment of wooden container according to the present invention; Fig. 1 (A) is a perspective view of the container, Fig. 1(B) is a longitudinal sectional view thereof, and Fig. 1 (C) is an enlarged sectional view showing a broken part of plywood sheet.
Fig. 2 (A) to Fig. 2 (D) show a process of producing wooden sheets for manufacturing wooden containers according to the present invention: Fig. 2 (A) is an explanatory view showing a slicing step of superior sheets, Fig. 2 (B) is an explanatory view showing a slicing step of inferior sheets, Fig. 2 (C) is an explanatory view showing an expansion step of the sheets, and Fig. 2 (D) is an explanatory view showing a drying step of the sheets.
Fig. 3 is a sectional view showing an embodiment of press apparatus according to the present invention.
Fig. 4 is a sectional view showing the press apparatus wherein a first forming step to form an intermediate product is carried out.
Fig. 5 is a sectional view showing the press apparatus wherein a second forming step to form a finished product is carried out.
Fig. 6 (A) and Fig. 6 (B) are enlarged sectional views of the press apparatus in which an adjusting plate is used; Fig. 6 (A) shows a forming step wherein a thin adjusting plate is used, and Fig. 6 (B) shows a forming step wherein a thick adjusting plate is used.

### [Description of Preferred Embodiments]

Embodiments of the present invention are described in detail, referring to drawings.

### <An embodiment of the wooden container>

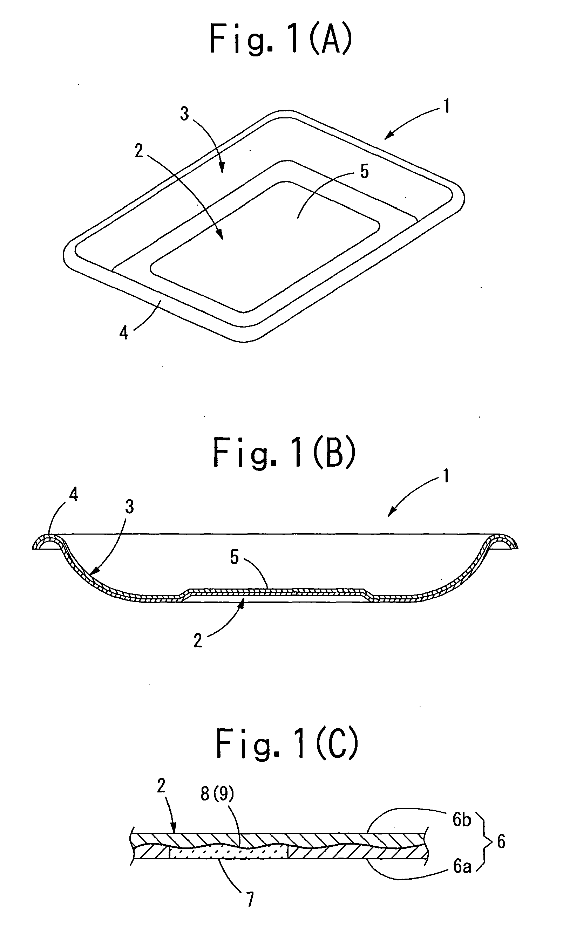

In Fig. 1, a wooden container 1 is illustrated as a tray, for example, having a bottom wall 2 and a peripheral wall 3, the tray may be shaped in either shallow or deep configuration. The tray has a surrounding edge 4 extending outside along an upper opening edge of the peripheral wall 3 and also extending downward as circular in cross section. A bulge portion 5 may be formed by slightly lifting the center of bottom wall 2 so that moisture of wet food packed in the container may stagnate below the circumference of the bulge portion 5.

The wooden container 1 is formed by a sheet 6 of plywood comprising an inferior sheet 6a having spoiled portions such as knot or crack and a superior sheet 6b having no such spoiled portion. The inferior sheet 6a and the superior sheet 6b are chosen from a large number of wooden sheets obtained by slicing a wooden piece. The sheet 6 lays the inferior sheet 6a and the superior sheet 6b with each other, then the sheet 6 is heated and pressed by up-and-down dies. The sheets 6a and 6b are glued mutually between the dies and formed in a shape of container 1 as mentioned above.
Accordingly, the whole part of container 1 is made wooden that can be incinerated easily so that no problem of waste treatment may be caused. Since the wooden container 1 is superior in hygroscopicity etc., it is suitable for packing fresh wet food.

As shown in Fig. 1 (B) and Fig. 1 (C), the wooden container 1 is constructed such that an inner wall is formed with said superior sheet 6b and an outside wall is formed with said inferior sheet 6a.
As illustrated in Fig. 1 (C), the inferior sheet 6a includes spoiled portions 7, such as knots and cracks or the like. However, no trouble for packing function of the container is caused, since the inferior sheet 6a is located in outside wall of the container.
On the other hand, the inside of container is formed with the superior sheet 6b having no spoiled portion, and moisture of fresh food packed in the container does not leak outside.

The inferior sheet 6a and the superior sheet 6b, which constitute the sheet 6, provide respective opposite sides with smooth surfaces but provide respective contact sides with rough surfaces 8 as shown in Fig. 1 (C). Adhesion is carried out by adhesion film 9 formed between the contacted rough surfaces 8. The adhesion film 9 is made by lignin oozed from wood content to the rough surfaces 8 during a heating pressing process as mentioned later.

### <An embodiment of a wooden sheet>

### (Slicing step)

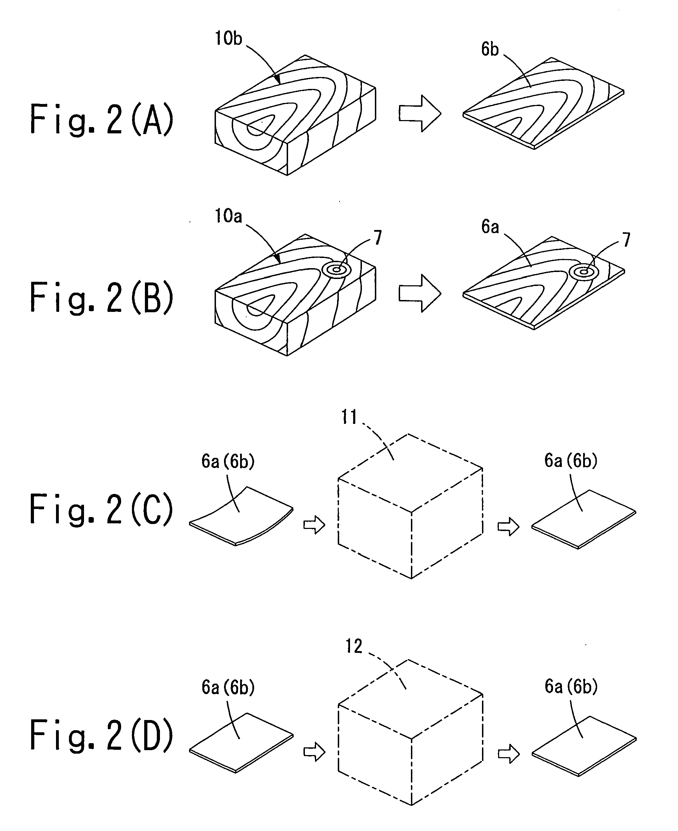

As shown in Fig. 2 (A), many superior sheets 6b are formed by slicing a good-quality wooden piece 10b. The sliced superior sheet 6b is formed one side with a smooth surface and another side with a fluffy rough surface. A slice direction of the wood piece 10b is set up so that grain may appear in the surfaces of superior sheet 6b beautiful.
In the present invention, even low-quality wood 10a containing spoiled portions 7, such as knot or crack, is used effectively without being discarded. That is, as shown in Fig. 2 (B), many inferior sheets 6a are formed by slicing a low-quality wooden piece 10a. The sliced inferior sheet 6a is formed one side with a smooth surface and another side with a fluffy rough surface. A slice direction of the wood piece 10a is set up so that grain may appear in the surface of inferior sheet 6a beautiful.

### (Expansion step)

The inferior sheet 6a and the superior sheet 6b may be distorted to an arch shape due to rotating cutters of slicing device. The distortion is corrected by inserting the sheets 6a and 6b through a pair of press rollers (not shown) of expansion device 11, as shown in Fig. 2 (C).

### (Drying step)

Subsequently, the sheets 6a and 6b are decreased in moisture contained in wood content by drier 12, as shown in Fig. 2 (D).
Under the condition that moisture contained in natural wood is considered as 100%, the sheets 6a and 6b are dried so that the moisture remains substantially 10% to 20%, preferably about 15%. In order to dry in short time, a heater is provided in the drier 12. The drier 12 may provide a zigzag-like passage through which the sheets 6a and 6b run in the predetermined distance. By controlling the heater and the running speed of the sheets 6a, 6b, it is possible to dry the sheets 6a, 6b remaining the limited moisture as mentioned above.

### <An embodiment of a process and apparatus for manufacturing the container> (First forming step)

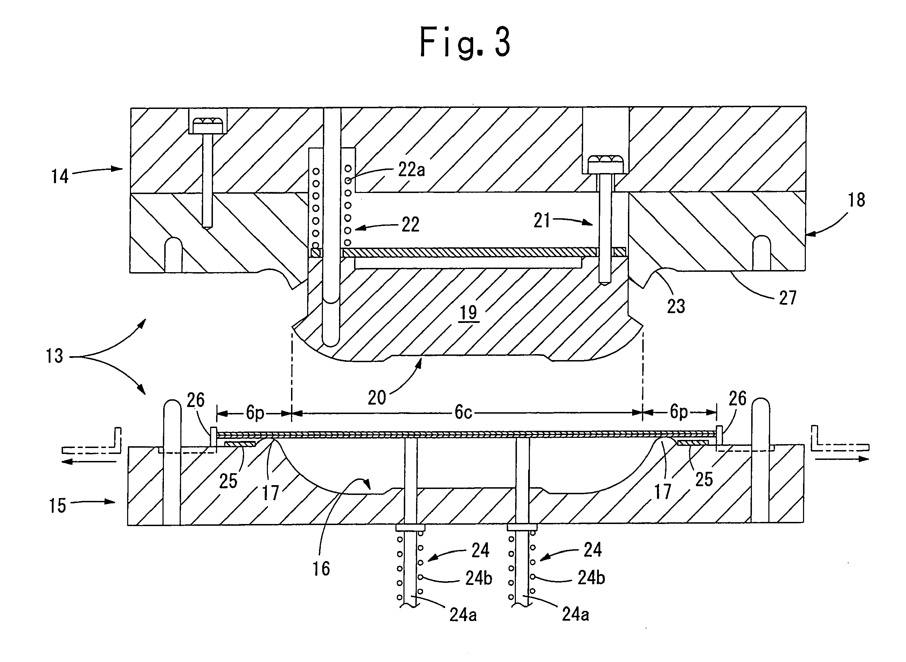

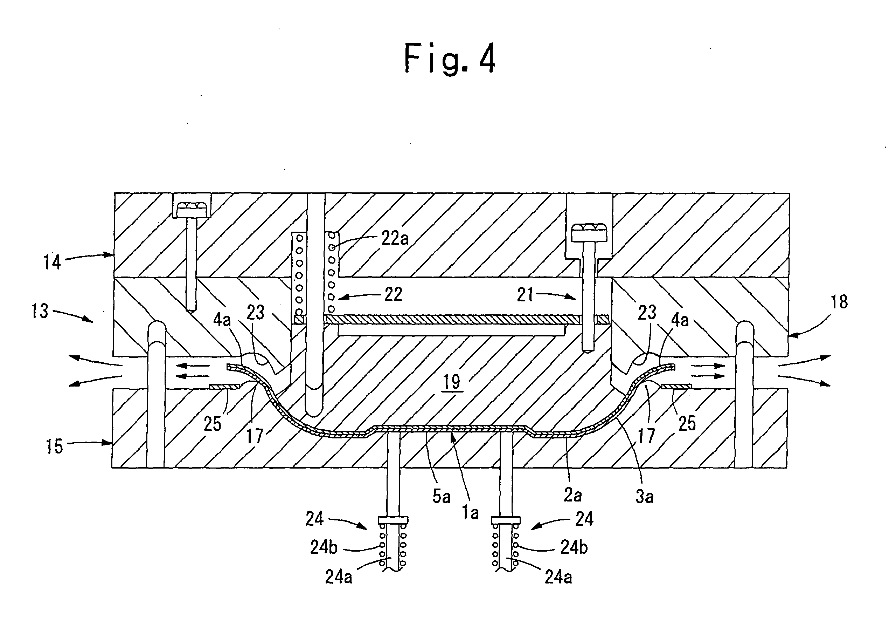

A pair of inferior sheet 6a and superior sheet 6b is chosen from a large number of sheets obtained as mentioned above. The sheets 6a and 6b are laid by contacting both rough surfaces 8 mutually to provide a sheet 6 of plywood.
The sheet 6 is heated and pressed by a press apparatus 13 as shown in Fig. 3 to produce an intermediate processed container product 1a (see Fig. 4).
When skipping the above mentioned drying step, or even when performing such drying step, powder of starch may be applied by sprinkling, if needed, on at least one of the rough surfaces 8 of the inferior sheet 6a and the superior sheet 6b. The powder may comprise flour for example, and a small quantity is sufficient for the application amount.

The press apparatus 13 forms, as a first forming step, an intermediate processed container product 1a (herein called as "intermediate product") which is provided with a bottom wall 2a and a peripheral wall 3a as shown in Fig. 4. However, an edge portion 4a is extended upwardly from the peripheral wall 3a. The center part of bottom wall 2a is slightly lifted to provide a bulge portion 5a preferably.

As shown in Fig. 3, the press apparatus 13 comprises a male die 14 shown as an upper die, and a female die 15 shown as a lower die. A driving source (not shown) is provided to open and close both dies 14 and 15.
The female die 15 has a concave 16 in a shape corresponding to the outside of said intermediate product 1a, i.e., corresponding to the outside of the bottom wall 2a including the bulge portion 5a and the peripheral wall 3a. An annular projection 17 is formed with the female die 15 at an opening edge of the concave 16. The annular projection 17 is in an arch-shape in cross section and extends outwardly from the concave 16.
The male die 14 comprises a main die 18 and a moving die 19. The moving die 19 is movable in forward and backward directions towards the female die 15 and is provided with a convex 20 in a shape corresponding to the inside of said intermediate product 1a, i.e., corresponding to the inside of the bottom wall 2a including the bulge portion 5a and the peripheral wall 3a.
The moving die 19 is guided by guide means 21 to move in forward and backward directions and is usually pushed by pushing means 22 having a spring 22a so that the moving die 19 projects from the main die 18.
For manufacturing the intermediate product 1a, the convex 20 of the moving die 19 forms the bottom wall 2a and the peripheral wall 3a at the same time, however, said edge portion 4a is not pressed by the convex 20.
The main die 18 provides an annular groove 23 of which surface fits in a smooth manner to the peripheral edge of the convex 20 of the moving die 19 when the moving die 19 is moved fully backward.

The female die 15 has support means 24 projecting in the concave 16. The support means 24 comprises rods 24a inserted through the female die 15 and springs 24b pushing the rods 24a towards the male die 14. The rods 24a are movable in forward and backward directions and are usually pushed by the springs 24b to advance into the concave 16 but stop at a position that each end of the rods 24a comes at same level of the height of said annular projection 17.

An adjusting plate 25 is attached detachably to the female die 15 at the portion surrounding the annular projection 17, and positioning means 26 is provided at outside the adjusting plate 25. As shown in Fig. 3, the positioning means 26 is movable between a position close to the adjusting plate 25 as shown by a solid line in Fig. 3 and a position away from the female die 15 as shown by a chain line in Fig. 3.

Exhaust means 27 is provided on opposite faces of the male main die 18 and the female die 15. The exhaust means 27 is illustrated as being provided on the opposite faces, however, it may be formed by slot passages provided on at least one of the opposite faces, or by bore passages provided through at least one of the male and female dies.

As shown in Fig. 3, under the state that the press apparatus 13 is opened, the sheet 6 comprising the plywood sheet is inserted between the up-and-down dies 14, 15 in such manner that the superior sheet 6b faces the male die 14 and the inferior sheet 6a faces the female die 15. As for the two sheets 6a and 6b, it is preferred to make the grains cross mutually
When the sheet 6 is put on the annular projection 17 of the female die 15, the positioning means 26 is positioned close to the projection 17 so that the periphery of the sheet 6 is restrained to be positioned at the predetermined position with respect to the female die 15. The center region 6c of sheet 6 is supported at the undersurface by support means 24, the sheet 6 does not bend downward.
Evacuating the positioning means 26 out of dies, as shown in Fig. 4, the dies 14 and 15 are closed and heating pressurization to the sheet 6 is carried out to form the intermediate product 1a.

When the male die 14 and the female die 15 are closed, the center region 6c except the peripheral region 6p of the sheet 6 is pressed by the convex 20 of the moving die 19 towards the concave 16 of the female die 15, and the sheet 6 is deformed between the convex 20 and the concave 16, while the moving mold 19 being projected by pushing means 22.
As the moving die 19 gets closer to the female die 15, the moving die 19 is retreated in the main die 18 against the spring 22a of the pushing means 22 while guided by the guide means 21. The convex 20 of the moving die 19 deforms the sheet 6 and pushes its center region 6c into the concave 16, while the undersurface of the sheet 6 is supported by the rods 24a which retreat from the concave 16 against the spring 24b.

The male die 14 and the female die 15 carry out the first forming step of the sheet 6 where the dies 14 and 15 are not closed completely but are opened a little as shown in Fig. 4. The sheet 6 is formed with the bottom wall 2a and the peripheral wall 3a to provide the intermediate product 1a between the concave 16 and the convex 20. The moving die 19 is pushed by the spring 22a of the pushing means 22 so that the sheet 6 is clamped in the concave 6 and heating pressurization to the sheet 6 is carried out.
In the first forming step, the annular groove 23 of the male main die 18 and the annular projection 17 of the female die 15 are apart mutually, therefore the edge portion 4a of the intermediate product 1a is not pressed. Thus, the first forming step forms the intermediate product 1a with only the bottom wall 2a and the peripheral wall 3. It does not cause the sheet 6 any strong stress, and neither distortion nor a crack is produced.

The first forming step is carried out for several seconds, about 2 to 3 seconds for example, and the sheet 6 is heated and pressed to form the intermediate product 1a. The lignin and moisture in wood content of the sheet 6 become steam and ooze to the rough surfaces 8 to glue together.
When powder of starch is applied to one of the rough surfaces as mentioned above, it becomes paste with steam, and it spreads over the rough surfaces 8 and glues together.
Steam generated during the first forming step is discharged out of the press apparatus 13 via exhaust means 27.

### (Second forming step)

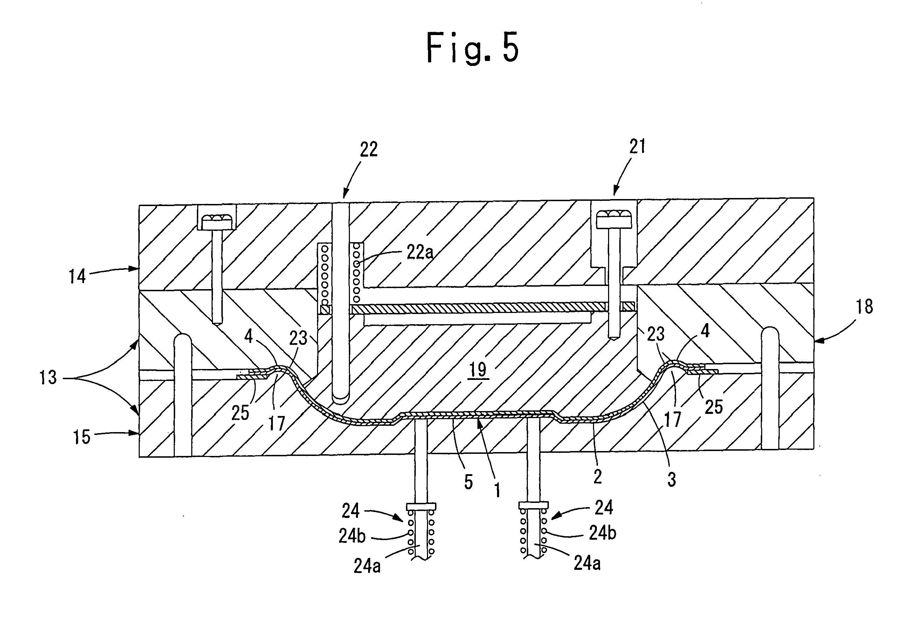

Subsequently, the press apparatus 13 is closed until the male die 14 and the female die 15 are brought in a complete clamp state to carry out a second forming step as shown in Fig. 5. Here, heating pressurization is performed again to the intermediate product 1a, and a finished container product 1 is produced.

In the second forming step, the annular projection 17 of the female die 15 and the annular groove 23 of the male main die 18 are closed mutually, while the moving die 19 is retreated in the main die 18 so as to meet the peripheral edge of the convex 20 with the annular groove 23. The edge portion 4a, which has not been pressed during the first forming step, is now heated and pressed to be shaped in a downward circle shape in cross section, thereby a surrounding edge 4 is formed.

In the second forming step, the intermediate product 1a is clamped again while forming the surrounding edge 4. The bottom wall 2a and the peripheral wall 3a are firmly clamped stronger than the clamping operation in the first forming step. Therefore, the sheet comprising the finished container product 1 is stiffened firmly, and its intensity is improved. In addition, even in case that the intermediate product 1a obtained by the first forming step includes distortion of a twist and the like in the bottom wall 2a or the peripheral wall 3a, such distortion is corrected by the second forming step.

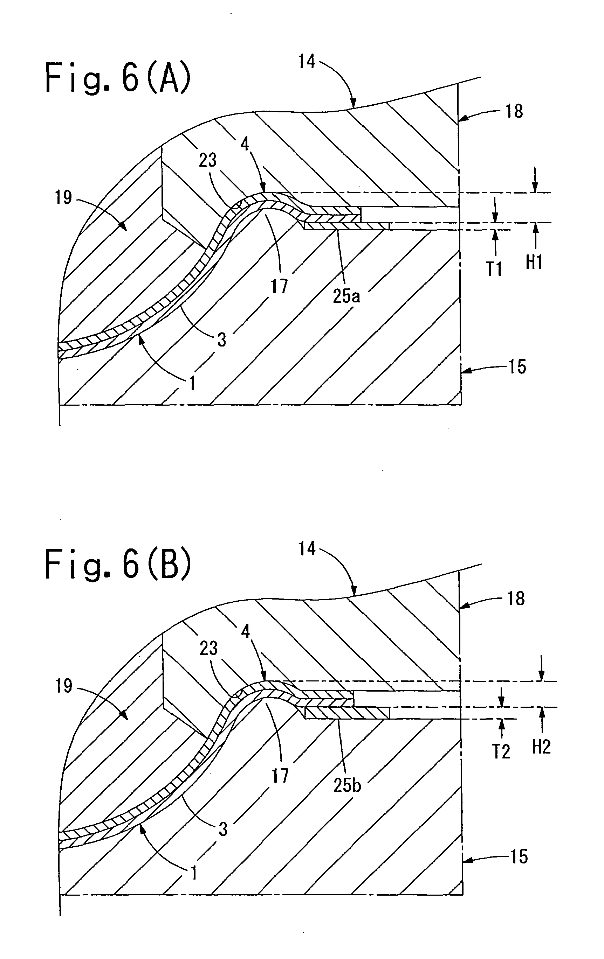

A potential problem may be included in the second forming step that a crack is produced depending on the wood quality, when pressing the edge portion 4a of the intermediate product 1a to form the surrounding edge 4 of the finished container product 1. Such a crack has the tendency to be easy to generate if the upheaval of surrounding edge 4 becomes remarkable, in other words, the curvature radius of surrounding edge 4 becomes small.
For this reason, the press apparatus 13 provides the female die 15 with the adjusting plate 25 at outside portion near the periphery of annular projection 17. It is preferred that plural plates having different thicknesses are prepared to be selectively used, such as a first adjusting plate 25a of comparatively small thickness T1 (2mm in thickness for example) as shown in Fig. 6 (A), and a second adjusting plate 25b of comparatively large thickness T2 (3mm in thickness for example). Each adjusting plate 25 forms an annular frame like configuration surrounding the outside of annular projection 17 and is attached on the female die 15 detachably.

The adjusting plate 25 may be removed when the second forming step is carried out. In case that no adjusting plate is attached, the surrounding edge 4 formed by the edge portion 4a of the intermediate product 1a becomes highest with respect to its height H.
If it seems that the surrounding edge 4 breaks in that condition, the first adjusting plate 25a of small thickness T1 is attached as shown in Fig. 6 (A), and the second forming step is carried out. Thereby, the problem of causing cracks may be solved since the surrounding edge 4 to be formed by the edge portion 4a is made its height H1 lower than the case where the adjusting plate 25a is not provided.
If it further seems that the surrounding edge 4 still breaks even the first adjusting plate 25a attached, it is replaced with the second adjusting plate 25b of large thickness T2 (namely, T2>T1) as shown in Fig. 6 (B), and the second forming step is carried out. The problem of causing cracks will be solved since the surrounding edge 4 to be formed by the edge portion 4a is made its height H2 further lower than the case where the first adjusting plate 25a is attached (namely, H2<H1).

Although two or more kinds of adjusting plates 25a and 25b which have different thicknesses may be provided for selective use as mentioned above, plural adjusting plates of the same thickness may be also used to achieve adjusting of the height H by piling up the plates.

## Claims

1. A process for manufacturing a wooden container, of which whole part is made by a sheet of wood, having a bottom wall (2), a peripheral wall (3) and a surrounding edge (4) extending downward as circular in cross section along an upper edge of said peripheral wall (3) by carrying out heating pressurization to said sheet (6) between male and female dies (14, 15) of a press apparatus (13) comprising:
a first forming step of producing an intermediate product (1a) of the container by carrying out heating pressurization to said sheet (6) on its center region (6c) except its peripheral region (6p) between said male and female dies (14, 15), thereby the intermediate product (1a) formed with a bottom wall (2a) and a peripheral wall (3a) having an edge portion (4a) extending upwardly therefrom is produced; and
a second forming step of forming a finished product (1) of the container by carrying out further heating pressurization to said intermediate product (1a) by clamping entire part thereof between said male and female dies (14, 15), whereby said bottom and peripheral walls (2a, 3a) are firmly pressed, and said edge portion (4a) is formed into said surrounding edge (4), thereby the finished product (1) formed with said bottom wall (2), said peripheral wall (3) and said surrounding edge (4) is produced.

2. A process for manufacturing a wooden container according to claim 1 wherein said bottom and peripheral walls (2a, 3a) of said intermediate product (1a) are firmly clamped in said second forming step so that any distortions of said walls (2a, 3a) may be corrected.

3. A process for manufacturing a wooden container, of which whole part is made by a sheet of wood, having a bottom wall (2), a peripheral wall (3) and a surrounding edge (4) extending downward as circular in cross section along an upper edge of said peripheral wall (3) by carrying out heating pressurization to said sheet (6) between male and female dies (14, 15) of a press apparatus (13) comprising:
a first forming step of producing an intermediate product (1a) of the container by closing said press apparatus (13) so that said male and female dies (14, 15) are closed so as not to be brought in a complete clamp state, and carrying out heating pressurization to said sheet (6) on its center region (6c) except its peripheral region (6p) between a convex (20) of said male die (14) and a concave (16) of said female die (15), thereby the intermediate product (1a) formed with a bottom wall (2a) and a peripheral wall (3a) having an edge portion (4a) extending upwardly therefrom is produced; and
a second forming step of forming a finished product (1) of the container by further closing said press apparatus (13) until said male and female dies (14, 15) are brought in a complete clamp state, and carrying out further heating pressurization to said intermediate product (1a) by clamping entire part thereof, whereby said bottom and peripheral walls (2a, 3a) are firmly pressed between said convex (20) and said concave (16) of the dies (14, 15), and said edge portion (4a) is formed into said surrounding edge (4) between an annular groove (23) and an annular projection (17) of said closed male and female dies (14, 15), thereby the finished product (1) formed with said bottom wall (2), said peripheral wall (3) and said surrounding edge (4) is produced.

4. An apparatus for manufacturing a wooden container, of which whole part is made by a sheet of wood, having a bottom wall (2), a peripheral wall (3) and a surrounding edge (4) extending downward as circular in cross section along an upper edge of said peripheral wall (3) by carrying out heating pressurization to said sheet (6) comprising:
a male die (14), a female die (15) and a driving source to open and close said male and female dies (14, 15) wherein:
said female die (15) includes a concave (16) and an annular projection (17), said concave (16) being shaped corresponding to outer surfaces of said bottom and peripheral walls (2, 3) of the container (1), and said annular projection (17) being shaped corresponding to a lower surface of said surrounding edge (4) and extending outwardly in an arch-shape in cross section from an opening edge of said concave (16); and
said male die (14) includes a main die (18) and a moving die (19) which is movable in forward and backward directions from said main die (18) toward said female die (15), said moving die (19) being pushed by pushing means (22) to project from said main die (18) and provided with a convex (20) in a shape corresponding to inner surfaces of said bottom and peripheral walls (2, 3), and said main die (18) being provided with an annular groove (23) in a shape corresponding to an upper surface of said surrounding edge (4) so that said annular groove (23) fits its surface in a smooth manner to a peripheral edge of said convex (20) when the moving die (19) is moved fully backward;
whereby a first forming step is performed by closing said male and female dies (14, 15) and carrying out heating pressurization to said sheet (6) on its center region (6c) except its peripheral region (6p) between said concave (16) and said convex (20) by moving said moving die (19) backward against said pushing means (22) under the state that said annular groove (23) and said annular projection (17) are apart mutually, thereby an intermediate product (1a) formed with a bottom wall (2a) and a peripheral wall (3a) having an edge portion (4a) extending upwardly therefrom is produced; and
subsequently a second forming step is performed by further closing said male and female dies (14, 15) until said male and female dies (14, 15) are brought in a complete clamp state and carrying out further heating pressurization to said intermediate product (1a) by clamping entire part thereof, whereby said bottom and peripheral walls (2a, 3a) are firmly pressed between said convex (20) and said concave (16) of the dies (14, 15), and said edge portion (4a) is clamped between said annular groove (23) and said annular projection (17) by moving said moving die (19) fully backward so that said edge portion (4a) is formed into said surrounding edge (4), thereby the finished product (1) formed with said bottom wall (2), said peripheral wall (3) and said surrounding edge (4) is produced.

5. An apparatus according to claim 4 wherein said female die (15) is provided with support means (24) which is movable in forward and backward directions toward said concave (16) and projects by a spring (24b) so that an end of said support means (24) comes at a position in said concave (16) substantially same level of the height of said annular projection (17), whereby said sheet (6) is supported at its undersurface of the center region (6c) by said support means (24) when said sheet (6) is put on said annular projection (17), and said sheet (6) is pushed by said convex (20) into said concave (16) while the undersurface of said sheet (6) is supported by said support means (24) which retreats from said concave (16) against said spring (24b).
